# EUROPÄISCHE PATENTSCHRIFT

(11) **EP 1 761 994 B1**
(45) Veröffentlichungstag und Bekanntmachung des Hinweises auf die Patenterteilung: **28.07.2010**
(21) Anmeldenummer: 05733529.1
(22) Anmeldetag: 14.04.2005
(51) Int. Cl.: H02K 29/08, H02K 15/00

(54) **ELEKTRISCHE MASCHINE UND VERFAHREN ZUR EINSTELLUNG EINES AXIALABSTANDS DER ELEKTRISCHEN MASCHINE**
ELECTRIC MACHINE AND METHOD FOR ADJUSTING AN AXIAL DISTANCE THEREIN
MACHINE ELECTRIQUE, ET PROCEDE POUR AJUSTER UN ECARTEMENT AXIAL DANS CETTE MACHINE ELECTRIQUE

(30) Priorität: 18.06.2004 DE 102004029535
(43) Veröffentlichungstag der Anmeldung: 14.03.2007
(73) Patentinhaber: ROBERT BOSCH GMBH, 70442 Stuttgart (DE)
(72) Erfinder: MALDENER, Klaus, 77886 Lauf (DE); WEHRLE, Andreas, 77770 Durbach (DE)
(86) Internationale Anmeldenummer: PCT/EP2005/051644
(87) Internationale Veröffentlichungsnummer: WO 2005/124977

(56) Entgegenhaltungen:
- GB-A- 2 047 010
- US-A- 4 862 044
- PATENT ABSTRACTS OF JAPAN Bd. 1996, Nr. 02, 29. Februar 1996 (1996-02-29) & JP 07 274442 A (ORIENTAL MOTOR CO LTD), 20. Oktober 1995 (1995-10-20)
- PATENT ABSTRACTS OF JAPAN Bd. 005, Nr. 027 (E-046), 18. Februar 1981 (1981-02-18) & JP 55 153261 A (MITSUBISHI ELECTRIC CORP), 29. November 1980 (1980-11-29)

## Beschreibung

### Stand der Technik

Die Erfindung geht aus von einer elektrischen Maschine nach dem Oberbegriff des Patentanspruchs 1. Eine derartige elektrische Maschine umfasst einen Sensor, ein Geberrad, an dem der Sensor axial ein Signal abgreift, wobei eine Stirnfläche des Sensors einer Ringfläche an einer Stirnseite des Geberrads benachbart ist, eine Welle, auf der das Geberrad befestigt ist, ein Festlager sowie ein Loslager, in denen die Welle gelagert ist, und ein Gehäuse.

Insbesondere elektronisch kommutierte Motoren (EC-Motoren) werden über die sensorisch erfassten Signale gesteuert. Dazu ist die Abstimmung des Sensorsystems entscheidend für die Genauigkeit der Kommutierungszeitpunkte, über die die einzelnen Spulen des Stators geschaltet werden. Das Optimum an Kommutierungsgenauigkeit wird dann erreicht, wenn die Elektronik den Phasennulldurchgang des magnetischen Flusses erkennt. Veränderungen davon wirken sich als Schaltfehler aus und fuhren dann zur Leistungsverzerrung des Motors. Ein oft verwendetes Sensorsystem besteht aus einem Sensor und einem Geberrad, der die Signale für den Sensor liefert. Um genaue Schaltpunkte zu erreichen, sind der Sensor und das Geberrad sehr nahe zueinander positioniert. Auf diese Weise wird der Schaltfehler reduziert. Üblicherweise wird dies durch die Montage sehr genauer Einzelbauteile erreicht Weiterhin werden remanenzstarke Sensormagnete verwendet.

Aufgabe der Erfindung ist es, ein axiales Montagekonzept zu schaffen, mit der elektrische Maschinen, insbesondere EC-Motoren, mit axialem Sensorabgriff toleranzreduziert und mit geringem Montageaufwand zusammengebaut werden können. Das Konzept soll ebenso bei DC-Motoren mit Lageerkennungssystem zur Anwendung kommen können. Erreicht wird dies durch eine elektrische Maschine mit den Merkmalen des Patentanspruchs 1.

### Vorteile der Erfindung

Die erfindungsgemäße elektrische Maschine mit den Merkmalen des Patentanspruchs 1 hat den Vorteil, dass die Leistungsstreuung der komplettierten elektrischen Maschine durch die Minimierung der axialen Abstandstoleranzen zwischen Sensor und Sensormagnet reduziert wird.

Hierzu umfasst die elektrische Maschine einen Sensor, ein Geberrad, an dem der Sensor axial ein Signal abgreift, wobei eine Stirnfläche des Sensors einer Ringfläche an einer Stirnseite des Geberrads benachbart ist, eine Welle, auf der das Geberrad befestigt ist, ein Festlager sowie ein Loslager, in denen die Welle gelagert ist, und ein Gehäuse, wobei das Geberrad axial auf der Welle verschiebbar ist, an der elektrischen Maschine zumindest ein Anschlag vorgesehen ist, der wenigstens eine Anschlagfläche aufweist, die in Richtung des Festlagers weist, das Geberrad ebenfalls wenigstens eine Anschlagfläche aufweist, die Anschlagfläche des Anschlags und die Anschlagfläche des Geberrads einander zugewandt sind und sich axial gegenüberliegen, die Anschlagfläche des Anschlags in Richtung des Festlagers axial mit der Stirnfläche des Sensors fluchtet oder über die Stirnfläche des Sensors hinausragt.

Dies führt zu einer erhöhten Signalgenauigkeit des Sensorsystems und dadurch zu einer geringen Streubreite im Leistungsverhalten der EC-Motoren bzw. EC-Generatoren. Es ermöglicht die Herstellung von Bauteilen, deren maßliche Anforderungen geringer sein müssen als bisher, da eine mißliche Korrektur während der Montage möglich ist. Außerdem ergeben sich einfache Montageprozesse. Maßnahmen zum Erreichen der Funktion dieser Erfindung können einfach in die Konstruktion eingebunden werden. Am einfachsten lässt sich das Axialspiel einstellen, wenn das Gehäuse einen zumindest axial elastisch verformbaren Bereich aufweist, über den das Festlager mit der Welle in Richtung des Loslagers verschiebbar ist, so dass das Geberrad durch den Anschlag in Richtung des Festlagers gedrückt werden kann.

Ein einfacher Aufbau ist gegeben, wenn der Anschlag an einem von dem Festlager entfernten Flansch der elektrischen Maschine vorgesehen ist und das Loslager in einem Lagersitz im Flansch angeordnet ist, wobei der Anschlag vorzugsweise an dem Lagersitz für das Loslager ausgebildet ist.

Zur Erzielung des axial elastischen Bereichs ist das Gehäuse vorzugsweise topfförmig ausgebildet, das Festlager ist im Boden angeordnet und der Boden ist zumindest in einem scheibenförmigen Bereich um das Festlager herum axial elastisch verformbar.

Für die spätere Montage ist es am einfachsten, wenn der Sensor auf einer Elektrobaugruppe angeordnet ist, die zwischen dem Flansch und dem Gehäuse angeordnet ist

Eine Antriebseinheit, insbesondere für ein Kraftfahrzeug, wie ein Lenkantrieb, Fensterheber, Schiebdachantrieb, Triebstrangsteller oder dergleichen mit einer derartigen elektrischen Maschine hat auch den Vorteil, dass die montagebedingte Leistungsstreuung reduziert ist, wobei Toleranzen in den Spulen, der Magnetremanenz, der Sensorempfindlichkeit selbst etc. damit nicht korrigierbar sind.

Ein einfaches Verfahren zur Einstellung des Axialabstands der elektrischen Maschine ergibt sich dadurch, dass die elektrische Maschine gehalten wird, dass auf einen zumindest axial elastisch verformbaren Bereich des Gehäuses eine Kraft ausgeübt wird, so dass das Festlager mit der Welle in Richtung des Loslagers verschoben und das Geberrad vom Anschlag in Richtung des Festlagers gedrückt wird und dass die Kraft wieder weggenommen wird, wodurch der Axialabstand zwischen dem Sensor und dem Geberrad hergestellt wird.

Weiter umsetzen lässt sich dies, indem das Loslager in einem Flansch montiert wird und der Sensor in einer Elektrobaugruppe, die Elektrobaugruppe am Flansch befestigt wird, so dass eine erste Vormontagebaugruppe gebildet wird, die Welle mit dem Geberrad in das Gehäuse gefügt werden, so dass eine zweite Vormontagebaugruppe gebildet wird, beide Vormontagebaugruppen miteinander verbunden werden und das Geberrad am Anschlag anliegt.

Ist die Verformung des Gehäuses weggesteuert, so lässt sich das Verfahren einfach in der Großserienfertigung implementieren.

Eine Vorrichtung zur Durchführung des Verfahrens weist eine Aufnahme für die elektrische Maschine, einen Stempel, der auf das Gehäuse einwirkt und die Kraft aufbringt, und eine Einrichtung zur Messung der Verschiebewegs des Gehäuses auf.

Weitere Vorteile und vorteilhafte Weiterbildungen ergeben sich aus den Unteransprüchen und der Beschreibung.

### Zeichnung

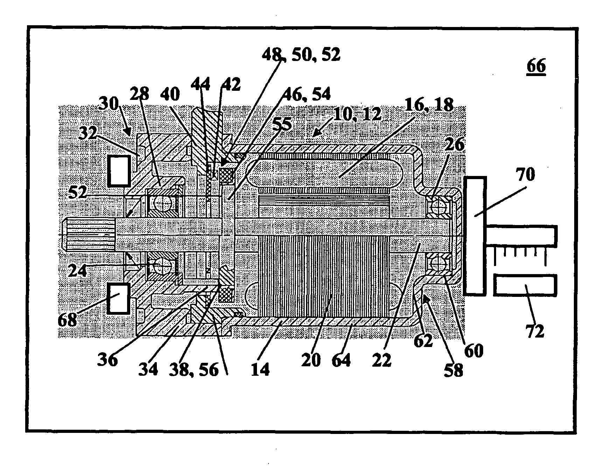

Ein Ausführungsbeispiel ist in der Zeichnung dargestellt und in der nachfolgenden Beschreibung näher erläutert Die einzige Figur zeigt einen EC-Motor im Längsschnitt auf eine Vorrichtung aufgespannt.

### Beschreibung des Ausführungsbeispiels

In der Figur ist eine elektrische Maschine 10 gezeigt, bei der es sich vorzugsweise um einen elektronisch kommutierten Motor bzw. bürstenlosen Gleichstrom-Motor (DC-Motor) handelt. Die elektrische Maschine 10 ist Teil einer Antriebseinheit 12, die bevorzugt Verwendung in einem Kraftfahrzeug findet. Die Antriebseinheit 12 ist ein Lenkantrieb, Fensterheber, Schiebdachantrieb, Triebstrangsteller oder dergleichen.

In einem topfförmigen Gehäuse 14 enthält die elektrische Maschine 10 einen, eine Wicklung 16 aufweisenden, Stator 18 und einen permanentmagnetisch erregten Rotor 20 zur Erzeugung des Abtriebs, wie beispielsweise des Drehmoments, zusammen mit dem Stator 18. Die Welle 22 des Rotors 20 ist in einem Loslager 24 und einem Festlager 26 gelagert, die beide vorzugsweise Wälzkörperlager sind, wobei das Loslager 24 auch als ein Gleitlager ausgeführt sein kann.

Das Loslager 24 ist in einem Lagersitz 28 eines Flanschs 30 angeordnet. Aus dem Flansch ragt die Welle 22 nach außen. Der Flansch 30 dient ferner dem Anflanschen der elektrischen Maschine 10 an ein Bauteil und schließt auch das Gehäuse 14 ab. Der Flansch 30 hat eine flache Topform, mit einem Boden 32, an dem der Lagersitz 28 ausgebildet ist, und mit einem Rand 34, der mit dem Gehäuse 14 verbunden ist Die Verbindung kann mittels Schrauben, Kleben, Rollieren oder dergleichen erfolgen. Ausgehend vom Lagersitz 28 stehen Stege 36 ab, die einen Anschlag bilden. Die Stege 36 verlaufen im Wesentlichen parallel zur Welle 22 und weisen mit Anschlagflächen 38 in Richtung des Festlagers 26, das im topförmigen Gehäuse 14 angeordnet ist. Die Anschlagflächen 38 verlaufen senkrecht zur Welle 22. Es kann auch ein einzelner beispielsweise ringförmiger Steg 36 vorgesehen sein, der stirnseitig Ausnehmungen hat, die die Anschlagfläche 38 in mehrere Anschlagflächen 38 aufteilt. Es sollte jedoch zumindest ein Steg 36 vorgesehen sein.

Ferner ist am Flansch 30 sowie zwischen diesem und dem Gehäuse 14 eine Elektrobaugruppe 40 vorgesehen. Die Elektrobaugruppe 40 umfasst ein in Kunststoff eingebettetes, nicht dargestelltes Stanzgitter, das den Stator 18 - gegebenenfalls über eine mit auf dem Stanzgitter angeordnete Steuerung - mit einer externen Spannungsversorgung verbindet. Es kann jedoch auch eine Verbindung mit einem externen Steuergerät vorgesehen sein. Auf der Elektrobaugruppe 40 ist ein vom Flansch 30 abgewandter Sensor 42 angeordnet, wobei es sich im vorliegenden Ausführungsbeispiel vorzugsweise um einen Hallsensor handelt. Der Sensor 42 ist auf einer Leiterplatte 44 montiert, die sich senkrecht zur Welle 22 erstreckt. Der Sensor 42 kann jedoch auch direkt auf dem Stanzgitter montiert sein.

Zwischen dem Sensor 42 bzw. der Elektrobaugruppe 40 und dem Stator 18 ist auf der Welle 22 ein Geberrad 46 befestigt, an dem der Sensor 42 axial ein Signal abgreift. Hierzu ist eine Stirnfläche 48 des Sensors 42 einer Ringfläche 50 an einer Stirnseite 52 des Geberrads 46 benachbart angeordnet. Die Ringfläche 50 ist an einem Magnetring 54 des Geberrads 46 ausgebildet. Dadurch kann der Sensor 42 eine Drehung bzw. die Drehzahl der Welle 22 erfassen. Der Magnetring 54 sitzt auf einer Nabe 55, die beispielsweise aus Kunststoff hergestellt ist, angeordnet, die auf der Welle 22 Übermaß bzw. eine Presspassung hat, wobei aber dennoch unter Kraft ein axiales Verschieben des Geberrads 46 möglich ist. Außer der Ringfläche 50 ist an der Stirnseite 52 des Geberrads 46 ebenfalls eine Anschlagfläche 56 vorgesehen, die vorzugsweise an der Nabe 55 ausgebildet ist. Die Anschlagfläche 38 der Stege 36 und die Anschlagfläche 56 des Geberrad 46 sind einander zugewandt bzw. die Anschlagfläche 38 der Stege 36 weisen in Richtung des Geberrads 46. Sie haben den gleichen radialen Abstand zur Welle 22 und liegen in Umfangsrichtung der Welle 22 oder der elektrischen Maschine 10 gesehen an der jeweils gleichen Stelle, weshalb sie sich axial gegenüber liegen.

In Richtung des Festlagers 28 gesehen ist die Anschlagfläche 38 des Stegs 36 in Bezug auf die Anschlagsfläche 56 des Sensormagnets 54 so ausgelegt, dass sich beide gegenüberliegenden aktiven Oberflächen des Sensors 42 und des Geberrads 46 gerade nicht berühren bzw. einen Abstand im Bereich von wenigen zehntel Millimeter haben.

Im Boden 58 des topfförmigen Gehäuses 14 ist ein Lagersitz 60 für das Festlager 26 ausgebildet Um den Lagersitz 60 herum hat der Boden 58 einen scheibenförmigen Bereich 62, der axial elastisch verformbar ist. Die ringförmige Wand 64 des Gehäuses 14 ist hingegen bei einer axial einwirkenden Kraft wesentlich weniger elastisch.

Die elektrische Maschine 10 ist in eine nur andeutungsweise gezeigte Vorrichtung 66 gespannt. Die Vorrichtung 66 hat eine Aufnahme 68 für die elektrische Maschine 10, wobei vorzugsweise der Flansch 30 in der Aufnahme 68 gespannt wird. Weiterhin ist ein Stempel 70 vorgesehen, der beispielsweise gegen den Lagersitz 30 presst und somit auf das Gehäuse 14 einwirkt bzw. eine Kraft aufbringt. Ferner ist eine Einrichtung 72 zur Messung der Verschiebewegs des Stempels 70 bzw. des Festlagers 26 vorgesehen, wodurch die Verschiebung weggesteuert ist.

Bevor die elektrische Maschine 10 auf die Vorrichtung 64 gespannt wird, wird das Loslager 24 in den Flansch 30 montiert. Der Sensor 42 wird auf der Elektrobaugruppe 40 angeordnet. Danach wird die Elektrobaugruppe 40 am Flansch 30 befestigt. Dadurch entsteht eine erste Vormontagebaugruppe. Die Welle 22 mit dem Geberrad 46 wird in das Gehäuse 14 gefügt, wodurch eine zweite Vormontagebaugruppe entsteht. Das Geberrad 46 wird dabei schon so auf die Welle 22 gesteckt, dass es beim Zusammenfügen die Stege 36 berührt. Dann werden die beiden Vormontagebaugruppen miteinander verspannt. Dadurch stehen das Geberrad 46 und die Stege 36 unter einer Vorspannung. Es kann auch, wenn die beiden Vormontagebaugruppen miteinander verspannt werden, dazu kommen, dass das Geberrad 46 durch die Stege 36 in Richtung des Festlagers 26 verschoben wird.

Wenn die elektrische Maschine 10 dann auf der Vorrichtung 66 gehalten wird, wird mit dem Stempel 70 auf den Lagersitz 60 gedrückt. Dadurch wird auf den axial elastisch verformbaren Bereich 62 des Gehäuses 14 eine Kraft ausgeübt, wodurch das Festlager 26 mit der Welle 22 in Richtung des Loslagers 24 verschoben wird. Das Geberrad 46 wird dabei von den Stegen 36 weiter in Richtung des Festlagers 26 gedrückt Wenn die Kraft durch Zurückfahren des Stempels 70 weggenommen wird, federt der elastische Teil des Bodens 58 zurück, wodurch der Axialabstand zwischen dem Sensor 42 und dem Geberrad 46 hergestellt wird. Dadurch ist es möglich, den Abstand zwischen dem Sensor 42 und der Ringfläche 50 bzw. der Sensormagnetoberfläche so klein wie möglich zu halten.

Auf Grund der Prozesskosten in der Großserienfertigung werden Montagebaugruppen üblicherweise weggesteuert montiert. Demzufolge würden sich die Einzeltoleranzen der Bauteile beider Vormontagebaugruppen stark auf die Abstandstoleranz zwischen dem Sensor 42 und der Ringfläche 50 bzw. der Sensormagnetoberfläche auswirken. Durch die im Montageprozess verschiebbare zweite Vormontagebaugruppe (Geberrad 46 auf Rotor 20) wird die Toleranzkette vom Gehäuse 14 über die Festlagerung zum Geberrad 46 eliminiert. Der größte Toleranzeinfluss des Gesamtaufbaus resultiert nun nur noch aus dem maßliche Aufbau zwischen der Stirnfläche des Sensors 42 auf der Elektrobaugruppe 40 und der Anschlagflächen 38 der Stege 36 am Flansch 30. Dieser kann jedoch durch eine angepasste Vermassungskette der Einzelteile auf ein Minimum beschränkt werden.

Der Toleranzaufbau der ersten Vormontagebaugruppe "Flansch 30 mit Elektrobaugruppe 40" ist so gewählt, dass die Anschlagflächen 38 der Stege 36 mindestens bis zur Stirnfläche 48 des Sensors 42 ragen, so dass ein axialer Montagedruck des Geberrads 46 über die Stege 36 zum Flansch 30 hin abgeleitet werden.

Die zweite Vormontagebaugruppe "Geberrad 46 mit Gehäuse 14, Rotor 20 und Stator 18" ist so aufgebaut, dass das Geberrad 46 beim Montageprozess durch die Stege 36 am Flansch 30 axial in Richtung Festlager 26 verschoben wird.

Natürlich können statt des einen gezeigten Sensors 42 auch mehrere Sensoren 42 vorgesehen sein.

## Patentansprüche

1. Elektrische Maschine (10) umfassend mindestens einen Sensor (42), ein Geberrad (46), an dem der Sensor (42) axial ein Signal abgreift, wobei eine Stirnfläche (48) des Sensors (42) einer Ringfläche (50) an einer Stirnseite (52) des Geberrads (46) benachbart ist, eine Welle (22), auf der das (46) Geberrad befestigt ist, ein Festlager (26) sowie ein Loslager (24), in denen die Welle (22) gelagert ist, und ein Gehäuse (14), **dadurch gekennzeichnet, dass** das Geberrad (46) axial auf der Welle (22) verschiebbar ist, an der elektrischen Maschine (10) zumindest ein Anschlag (36) vorgesehen ist, der wenigstens eine Anschlagfläche (38) aufweist, die in Richtung des Festlagers (26) weist, dass das Geberrad (46) ebenfalls wenigstens eine Anschlagfläche (56) aufweist, dass die Anschlagfläche (38) des Anschlags (36) und die Anschlagfläche (56) des Geberrads (46) einander zugewandt sind und sich axial gegenüberliegen, dass die Anschlagfläche (38) des Anschlags (36) in Richtung des Festlagers (26) axial mit der Stirnfläche (48) des Sensors (42) fluchtet oder über die Stirnfläche (48) des Sensors (42) hinausragt.

2. Elektrische Maschine (10) nach Anspruch 1, **dadurch gekennzeichnet, dass** das Gehäuse (14) einen zumindest axial elastisch verformbaren Bereich (62) aufweist, über den das Festlager (26) mit der Welle (22) in Richtung des Loslagers (24) verschiebbar ist, so dass das Geberrad (46) durch den Anschlag (36) in Richtung des Festlagers (26) gedrückt werden kann.

3. Elektrische Maschine (10) nach Anspruch 1 oder 2, **dadurch gekennzeichnet, dass** das Geberrad (46) einen axialen Festsitz mit der Welle (22) aufweist und unter axialem Kraflaufwand verschoben werden kann und im Motorbetrieb fest mit der Welle (22) verbunden bleibt.

4. Elektrische Maschine (10) nach einem der Ansprüche 1 bis 3, **dadurch gekennzeichnet, dass** der Anschlag (36) an einem von dem Festlager (26) entfernten Flansch (30) der elektrischen Maschine (10) vorgesehen ist und dass das Loslager (24) in einem Lagersitz (28) im Flansch (30) angeordnet ist, wobei der Anschlag (36) vorzugsweise an dem Lagersitz (28) für das Loslager (24) ausgebildet ist.

5. Elektrische Maschine (10) nach einem der Ansprüche 1 bis 4, **dadurch gekennzeichnet, dass** das Gehäuse (14) topfförmig ausgebildet ist, dass im Boden (58) das Festlager (26) angeordnet ist und dass der Boden (58) zumindest in einem scheibenförmigen Bereich (62) um das Festlager (26) herum axial elastisch verformbar ist.

6. Elektrische Maschine (10) nach einem der Ansprüche 1 bis 6, **dadurch gekennzeichnet, dass** das Gehäuse (14) mit einem in axialer Richtung elastischen Bereich ausgebildet ist, wodurch das Festlager (26) mit der Welle 22 axial elastisch bewegt werden kann.

7. Elektrische Maschine (10) nach einem der Ansprüche 1 bis 6, **dadurch gekennzeichnet, dass** der Sensor (42) auf einer Elektrobaugruppe (40) angeordnet ist, die zwischen den Lagern (24, 26) angeordnet ist.

8. Antriebseinheit (12), insbesondere für ein Kraftfahrzeug, wie ein Lenkantrieb, Fensterheber, Schiebdachantrieb, Triebstrangsteller oder dergleichen mit einer elektrischen Maschine (10) als EC-Motor und als DC-Motor nach einem der vorhergehenden Ansprüche.

9. Verfahren zur Einstellung eines Axialabstands der elektrischen Maschine (10) nach einem der vorhergehenden Ansprüche, **dadurch gekennzeichnet, dass** die elektrische Maschine (10) gehalten wird, dass auf einen zumindest axial elastisch verformbaren Bereich (62) des Gehäuses (14) eine Kraft ausgeübt wird, so dass das Festlager (26) mit der Welle (22) in Richtung des Loslagers (24) verschoben und das Geberrad (46) vom mindestens einen Anschlag (36) in Richtung des Festlagers (26) gedrückt wird, und dass die Kraft wieder weggenommen wird, wodurch der Axialabstand zwischen dem Sensor (42) und dem Geberrad (46) hergestellt wird.

10. Verfahren nach Anspruch 9, **dadurch gekennzeichnet, dass** das Loslager (24) in einem Flansch (30) montiert wird und der Sensor (42) in einer Elektrobaugruppe (40), dass die Elektrobaugruppe (40) am Flansch (30) befestigt wird, so dass eine erste Vormontagebaugruppe gebildet wird, dass die Welle (22) mit dem Geberrad (46) in das Gehäuse (14) gefügt werden, so dass eine zweite Vormontagebaugruppe gebildet wird, dass beide Vormontagebaugruppen miteinander verbunden werden und dass das Geberrad (46) beim Montagevorgang am Anschlag (36) anliegt.

11. Verfahren nach Anspruch 9 oder 10, **dadurch gekennzeichnet, dass** die Verformung des Gehäuses (14) weggesteuert ist.

12. Vorrichtung (66) zur Durchführung des Verfahrens nach einem der Ansprüche 9 bis 11, **dadurch gekennzeichnet, dass** die Vorrichtung (66) eine Aufnahme (68) für die elektrische Maschine (10), einen Stempel (70), der auf das Gehäuse (14) einwirkt und die Kraft aufbringt, und eine Einrichtung (72) zur Messung der Verschiebewegs des Festlagers (26) aufweist.

## Claims

1. Electrical machine (10) comprising at least one sensor (42), a transmitter wheel (46) on which the sensor (42) taps off a signal axially, wherein an end surface (48) of the sensor (42) is adjacent to a ring surface (50) on one end face (52) of the transmitter wheel (46), a shaft (22) on which the transmitter wheel (46) is mounted, a fixed bearing (26) and a loose bearing (24), in the two of which the shaft (22) is borne, and a housing (14), **characterized in that** the transmitter wheel (46) can be moved axially on the shaft (22), at least one stop (36) is provided on the electrical machine (10) and has at least one stop surface (38) which points in the direction of the fixed bearing (26), **in that** the transmitter wheel (46) likewise has at least one stop surface (56), **in that** the stop surface (38) of the stop (36) and the stop surface (56) of the transmitter wheel (46) face one another and are axially opposite one another, **in that** the stop surface (38) of the stop (36) is aligned axially with the end surface (48) of the sensor (42) in the direction of the fixed bearing (26), or projects beyond the end surface (48) of the sensor (42).

2. Electrical machine (10) according to Claim 1, **characterized in that** the housing (14) has an at least axially elastically deformable area (62), via which the fixed bearing (26) can be moved with the shaft (22) in the direction of the loose bearing (24), such that the transmitter wheel (46) can be pushed by the stop (36) in the direction of the fixed bearing (26).

3. Electrical machine (10) according to Claim 1 or 2, **characterized in that** the transmitter wheel (46) has an axially fixed seating with the shaft (22) and can be moved by application of force axially, and, when in the motor mode, remains firmly connected to the shaft (22).

4. Electrical machine (10) according to one of Claims 1 to 3, **characterized in that** the stop (36) is provided on a flange (30), which is remote from the fixed bearing (26), on the electrical machine (10), and **in that** the loose bearing (24) is arranged in a bearing seat (28) in the flange (30), with the stop (36) preferably being formed on the bearing seat (28) for the loose bearing (24).

5. Electrical machine (10) according to one of Claims 1 to 4, **characterized in that** the housing (14) is in the form of a pot, **in that** the fixed bearing (26) is arranged in the base (58), and **in that** the base (58) can be deformed axially and elastically around the fixed bearing (26), at least in an area (62) which is in the form of a disc.

6. Electrical machine (10) according to one of Claims 1 to 6, **characterized in that** the housing (14) has an area which is elastic in the axial direction, thus allowing the fixed bearing (26) to move elastically and axially with the shaft (22).

7. Electrical machine (10) according to one of Claims 1 to 6, **characterized in that** the sensor (42) is arranged on an electrical assembly (40) which is arranged between the bearings (24, 26).

8. Drive unit (12), in particular for a motor vehicle, such as a steering drive, window winder, sliding roof drive, drive train controller or the like, having an electrical machine (10) as an AC motor or as a DC motor according to one of the preceding claims.

9. Method for adjusting an axial separation of the electrical machine (10), according to one of the preceding claims, **characterized in that** the electrical machine (10) is held, **in that** a force is exerted on an at least axially elastically deformable area (62) of the housing (14), such that the fixed bearing (26) is moved with the shaft (22) in the direction of the loose bearing (24), and the transmitter wheel (46) is pushed by the at least one stop (36) in the direction of the fixed bearing (26), and **in that** the force is removed again, thus producing the axial separation between the sensor (42) and the transmitter wheel (46).

10. Method according to Claim 9, **characterized in that** the loose bearing (24) is mounted in a flange (30), and the sensor (42) is mounted in an electrical assembly (40) **in that** the electrical assembly (40) is attached to the flange (30) such that a first preassembled assembly is formed, **in that** the shaft (22) is passed with the transmitter wheel (46) into the housing (14) such that a second preassembled assembly is formed, **in that** the two preassembled assemblies are connected to one another, and **in that** the transmitter wheel (46) rests on the stop (36) during the assembly process.

11. Method according to Claim 9 or 10, **characterized in that** the deformation of the housing (14) is movement-controlled.

12. Apparatus (66) for carrying out the method according to one of Claims 9 to 11, **characterized in that** the apparatus (66) has a holder (68) for the electrical machine (10), a stamp (70) which acts on the housing (14) and applies the force, and a device (72) for measuring the displacement movement of the fixed bearing (26).

## Revendications

1. Machine électrique (10) comprenant
au moins un détecteur (42),
une roue émettrice (46) sur laquelle le détecteur (42) prélève axialement un signal,
une surface frontale (48) du détecteur (42) étant voisine d'une surface annulaire (50) du côté frontal (52) de la roue émettrice (46),
un arbre (22) sur lequel la roue émettrice (46) est fixée,
un palier fixe (26) ainsi qu'un palier libre (24) dans lesquels l'arbre (22) est monté et
un boîtier (14),
**caractérisée en ce que**
la roue émettrice (46) peut coulisser axialement sur l'arbre (22),
**en ce qu'**au moins une butée (36) est prévue sur la machine électrique (10) et présente au moins une surface de butée (38) tournée en direction du palier fixe (26),
**en ce que** la roue émettrice (46) présente également au moins une surface de butée (56),
**en ce que** la surface de butée (38) de la butée (36) et la surface de butée (56) de la roue émettrice (46) sont tournées l'une vers l'autre et sont opposées axialement et
**en ce que** la surface de butée (38) de la butée (36) est alignée axialement sur la surface frontale (48) du détecteur (42) dans la direction du palier fixe (26) ou déborde au-delà de la surface frontale (48) du détecteur (42).

2. Machine électrique (10) selon la revendication 1, **caractérisée en ce que** le boîtier (14) présente une partie (62) élastiquement déformable au moins axialement sur laquelle le palier fixe (26) peut coulisser avec l'arbre (22) en direction du palier libre (24), de telle sorte que la roue émettrice (46) puisse être repoussée par la butée (36) en direction du palier fixe (26).

3. Machine électrique (10) selon les revendications 1 ou 2, **caractérisée en ce que** la roue émettrice (46) présente un siège fixe avec l'arbre (22) et peut être repoussée par application d'une force axiale tout en restant reliée solidairement à l'arbre (22) lorsque le moteur fonctionne.

4. Machine électrique (10) selon l'une des revendications 1 à 3, **caractérisée en ce que** la butée (36) est prévue sur une bride (30) de la machine électrique (10) située à distance du palier fixe (26) et **en ce que** le palier libre (24) est disposé dans un siège de palier (28) ménagé dans la bride (30), la butée (36) étant formée de préférence sur le siège de palier (28) prévu pour le palier libre (24).

5. Machine électrique (10) selon l'une des revendications 1 à 4, **caractérisée en ce que** le boîtier (14) est configuré en cuvette, **en ce que** le palier fixe (26) est disposé sur le fond (58) et **en ce que** le fond (58) est élastiquement déformable axialement autour du palier fixe (26) au moins dans une partie (62) en forme de disque.

6. Machine électrique (10) selon l'une des revendications 1 à 6, **caractérisée en ce que** le boîtier (14) est configuré avec une partie élastique dans la direction axiale grâce à laquelle le palier fixe (26) peut être déplacé élastiquement axialement avec l'arbre (22).

7. Machine électrique (10) selon l'une des revendications 1 à 6, **caracterisée en ce que** le détecteur (42) est disposé sur un module électrique (40) disposé entre les paliers (24, 26).

8. Unité d'entraînement (12), en particulier pour véhicule automobile, par exemple entraînement de volant, lève-vitre, entraînement de toit ouvrant, actionneur du train d'entraînement ou similaires, et présentant comme moteur EC et comme moteur DC une machine électrique (10) selon l'une des revendications précédentes.

9. Procédé de réglage de la distance axiale de la machine électrique (10) selon l'une des revendications précédentes,
**caractérisé en ce que**
la machine électrique (10) est maintenue,
**en ce qu'**une force est exercée sur une partie (62) du boîtier (14) élastiquement déformable au moins axialement, de telle sorte que le palier fixe (26) soit déplacé avec l'arbre (22) en direction du palier libre (24) et que la roue émettrice (46) soit repoussée par au moins une butée (36) en direction du palier fixe (26) et **en ce que** l'action de la force est interrompue, suite à quoi la distance axiale entre le détecteur (42) et la roue émettrice (46) est établie.

10. Procédé selon la revendication 9, **caractérisé en ce que** le palier libre (24) est monté dans une bride (30) et le détecteur (42) dans un module électrique (40), **en ce que** le module électrique (40) est fixé sur la bride (30) de manière à former un premier module pré-monté, **en ce que** l'arbre (22) est inséré avec la roue émettrice (46) dans le boîtier (14) de manière à former un deuxième module pré-monté, **en ce que** les deux modules pré-montés sont reliés l'un à l'autre et **en ce que** la roue émettrice (46) repose contre la butée (36) lors de l'opération de montage.

11. Procédé selon les revendications 9 ou 10, **caractérisé en ce que** la déformation du boîtier (14) est asservie au déplacement.

12. Dispositif (66) en vue de l'exécution du procédé selon l'une des revendications 9 à 11, **caractérisé en ce que** le dispositif (66) présente un logement (68) pour la machine électrique (10), un poussoir (70) qui agit sur le boîtier (14) et exerce la force et un système (72) de mesure du chemin parcouru par le palier fixe (26).
